# EUROPÄISCHE PATENTSCHRIFT

(11) **EP 2 681 772 B1**
(45) Veröffentlichungstag und Bekanntmachung des Hinweises auf die Patenterteilung: **14.09.2016**
(21) Anmeldenummer: 12705070.6
(22) Anmeldetag: 17.02.2012
(51) Int. Cl.: H02S 20/22

(54) **VORRICHTUNG ZUM BEFESTIGEN VON SOLARMODULEN AN EINER FASSADE**
DEVICE FOR FASTENING SOLAR MODULES ON A FACADE
DISPOSITIF POUR FIXER DES MODULES SOLAIRES SUR UNE FAÇADE

(30) Priorität: 28.02.2011 DE 102011012600
(43) Veröffentlichungstag der Anmeldung: 08.01.2014
(73) Patentinhaber: Näbauer, Anton, 80805 München (DE)
(72) Erfinder: DENGG, Sebastian, 82256 Fürstenfeldbruck (DE); RASPINI, Andreas, 86911 Diessen am Ammersee (DE); NAEBAUER, Anton, 80805 München (DE); TRITSCH, Tobias, 81929 Muenchen (DE)
(74) Vertreter: Thum, Bernhard
(86) Internationale Anmeldenummer: PCT/EP2012/000720
(87) Internationale Veröffentlichungsnummer: WO 2012/116786

(56) Entgegenhaltungen:
- EP-A1- 1 703 037
- EP-A1- 2 099 077
- EP-A2- 2 187 448
- EP-A2- 2 206 992
- WO-A1-95/32346
- WO-A2-2009/092401
- WO-A2-2010/006735
- DE-A1-102009 019 829
- JP-A- 2000 064 532
- US-A1- 2003 010 372
- US-B1- 6 414 237

## Beschreibung

Die vorliegende Erfindung betrifft eine Vorrichtung zum Befestigen wenigstens eines Solarmoduls an einer Fassade, vorzugsweise einer Gebäudefassade, umfassend
- wenigstens ein an einem Solarmodul rückseitig angebrachtes Trägerprofil, und
- wenigstens ein an der Fassade angebrachtes Halteprofil.

Der Einsatz von photovoltaischen Solarmodulen hat in den vergangenen Jahren erheblich zugenommen. Aufgrund der immer populärer werdenden Nutzung von Solarenergie werden sowohl im privaten Bereich als auch zur kommerziellen Stromerzeugung zunehmend Solarmodule eingesetzt. Während in der Vergangenheit vornehmlich gerahmte Solarmodule verwendet wurden, d.h. Solarmodule, die in einem Metallrahmen eingefasst waren, werden inzwischen verstärkt rahmenlose Solarmodule bevorzugt. Dies hat zum einen Kostengründe, zum anderen ist dies aber auch durch neue Fertigungsmöglichkeiten bedingt. Auch hängt dies damit zusammen, dass großflächige Solarmodule an Bedeutung gewinnen. Gerade bei der Verkleidung von Gebäudefassaden, bei der die Solarmodule im Wesentlichen in vertikaler Richtung ausgerichtet sind und bei der große Flächen mit Solarmodulen verkleidet werden, hat die Verwendung von ungerahmten Solarmodulen darüber hinaus auch den Hintergrund eines möglichst homogenen Erscheinungsbilds der verkleideten Gebäudefläche.

Aus dem Stand der Technik sind bereits verschiedene Systeme zur Fixierung von Solarmodulen an Fassaden bekannt. So zeigt beispielsweise das Dokument EP 1 703 037 A1 ein solches System, bei dem gerahmte Solarmodule verwendet werden, wobei an den Rahmen Haken vorgesehen sind, die in horizontal verlaufende Querprofile einer Fassade eingehängt werden können.

Das Dokument US 2003/00010372 A1 beschreibt ein System, bei dem die Solarmodule über zusätzliche Befestigungselemente, die frontseitig das Solarmodul umgreifen, an einer Haltekonstruktion einer Fassade oder eines Daches angebracht werden. Neben der aüfwändigen Konstruktion zeigt dieses System den Nachteil, dass die Befestigungselemente an der Fassade sichtbar sind.

Das Dokument EP 2 099 077 A1 offenbart ein Befestigungssystem mit horizontal verlaufenden Querprofilen, die in entsprechende Querprofile an der Fassade einsetzbar sind. Allerdings fällt mit diesem System die endgültige Fixierung der Solarmodule schwer. Außerdem sind derartig über Querprofile montierte Solarmodule anfällig für eine Fehlausrichtung in Querrichtung. Ein ähnliches System ist darüber hinaus in dem Dokument WO 2009/092401 A2 beschrieben. Befestigungssysteme mit horizontal verlaufenden Querprofilen haben darüber hinaus den Nachteil, dass diese in der Regel in der Tiefe größer bauen, weil die vertikal verlaufenden Querprofile üblicherweise an horizontal verlaufenden fassadenseitigen Längsprofilen befestigt werden. Es ist also eine zusätzliche "Profilebene" erforderlich.

Aus dem Dokument WO 95/32346 A1 ist eine Befestigungsvorrichtung für Module, insbesondere Solarmodule, nach dem Oberbegriff von Patentanspruch 1 bekannt. Bei dieser Befestigungsvorrichtung werden an einer Gebäudefassade vertikal verlaufende Halteprofile fixiert. In diese Halteprofile sind in fest vorgegebenen Positionen ohne Justagemöglichkeit horizontal verlaufende Trägerprofile einsetzbar. An den Trägerprofilen sind die Module über Verklebungen vermittels Kleberaupen angebracht. Die Kleberaupen verlaufen entsprechend den Trägerprofilen horizontal. Dies führt dazu, dass sich auf den horizontal verlaufenden Kleberaupen Wasser sammeln kann, was über die Zeit zu witterungsbedingter Korrosion der Kleberaupen führt. Dadurch kann die Befestigung der Module an den Trägerprofilen geschwächt werden.

Aus dem Dokument 10 2009 019 829 A1 ist eine Unterbaukonstruktion für Solarmodule bekannt, die in einem Solarpark geneigt zu einer horizontalen Oberfläche aufgestellt werden. Diese Konstruktion umfasst schräg verlaufende Halteprofile, die mit der Unterbaukonstruktion verbunden sind, und Trägerprofile, auf denen die Solarmodule aufgebracht sind. Die Halteprofile und Trägerprofile greifen formschlüssig ineinander, ohne dass eine Justagemöglichkeit besteht.

Der Erfindung liegt die Aufgabe zugrunde, eine Vorrichtung zum Befestigen wenigstens eines Solarmoduls an einer Fassade bereitzustellen, die bei einfachem und kostengünstigem Aufbau eine einfache Montage, Ausrichtung und Fixierung des jeweiligen Solarmoduls unter Vermeidung der vorstehend mit Bezug auf den Stand der Technik beschriebenen Nachteile erlaubt.

Diese Aufgabe wird durch eine Vorrichtung mit den Merkmalen des Anspruchs 1 gelöst. Dabei ist wenigstens ein Profil von
Trägerprofil und Halteprofil von einem länglichen Element gebildet, an dem eine Anlagefläche sowie eine Eingriffsstruktur vorgesehen ist, wobei an dem anderen Profil von Trägerprofil und Halteprofil eine Komplementäranlagefläche und eine Komplementäreingriffstruktur vorgesehen sind, wobei in einem montierten Zustand die Anlagefläche und die Komplementäranlagefläche zur Positionierung des Solarmoduls in einer vorbestimmten Solllage aneinander anliegen und die Eingriffstruktur mit der Komplementäreingriffstrukturen derart zusammenwirkt, dass infolge der Montage des Solarmoduls das Trägerprofil schwerkraftbe-dingt an dem Halteprofil haltend angebracht ist.

Die Erfindung macht sich den Vorteil zu Nutze, dass an dem Halteprofil und an dem Trägerprofil bereits sämtliche Maßnahmen zur Ausrichtung und zum Halten des Solarmoduls an der Fassade vorgesehen sind. Die Montage sowie das Halten des jeweiligen Solarmoduls in seiner Sollposition erfolgen schwerkraftunterstützt, so dass nur noch geringe zusätzliche Maßnahmen erforderlich sind, um das Solarmodul schließlich zu fixieren.

Ein wesentlicher Vorteil der Erfindung besteht darin, dass mit der erfindungsgemäßen Lösung einzelne Solarmodule bedarfsweise aus einer Anordnung einer Vielzahl
von Solarmodulen unter geringem Aufwand entfernt werden können, beispielsweise weil es erforderlich ist, Zugang zu einem Fassadenbereich hinter dem betreffenden Solarmodul zu erlangen, oder weil das Solarmodul zu Wartungs- oder Reparaturzwecken entfernt oder ganz ausgetauscht werden muss. Die Anordnung der übrigen Solarmodule bleibt davon unberührt. Bei einem solchen Entfernen eines einzelnen Solarmoduls sind auch, anders als beim Stand der Technik, nur sehr geringe Maßnahmen zu ergreifen. Insbesondere ist es nicht erforderlich, eine Vielzahl von Schrauben, Bolzen oder dergleichen zu lösen. Dieser Vorteil zahlt sich bei der Erfindung doppelt aus, weil eine spätere Anbringung des entfernten oder eines Austausch-Solarmoduls gleichsam schnell und problemlos möglich ist.

Gemäß einer Ausführungsvariante der vorliegenden Erfindung kann vorgesehen sein, dass sowohl das Trägerprofil als auch das Halteprofil jeweils von einem länglichen Profil mit im montierten Zustand einander zugewandten ebenen Anlageflächen und Komplementäranlageflächen gebildet sind. Die Verwendung länglicher Profile erlaubt eine kostengünstige Herstellung. Die Anlagefläche und Komplementäranlageflächen sorgen für eine definierte Lage und Ausrichtung der Solarmodule relativ zur Fassade. Vorzugsweise erstreckt sich die Anlagefläche im Wesentlichen parallel zur Fassadenfläche des Gebäudes, die mit den Solarmodulen zu verkleiden ist. Die Profile können bei geeigneter Materialwahl ferner als elektrische Leiter zum Anschließen der Solarmodule verwendet werden.

Vorzugsweise ist bei der vorliegenden Erfindung vorgesehen, dass die Längsrichtung des länglichen Profils im montierten Zustand im Wesentlichen in vertikaler Richtung verläuft, wobei das Trägerprofil parallel zum Halteprofil verläuft. Mit anderen Worten verlaufen die jeweiligen Profile entlang der Gebäudefassade in vertikaler Richtung, d.h. in Schwerkraftrichtung.

Gemäß einer bevorzugten Ausführungsvariante der Erfindung ist vorgesehen, dass ein Profil von Trägerprofil und Halteprofil als Eingriffstruktur wenigstens eine Halteklammer aufweist, die einen ersten Schenkel aufweist, der in einem montierten Zustand die Relativlage von Halteprofil und Trägerprofil in Längsrichtung bestimmt, und die einen zweiten Schenkel aufweist, der im montierten Zustand unter Vorspannung die Anlagefläche in Anlage mit der Komplementäranlagefläche hält. Auch diese Ausführungsvariante unterstützt den Vorteil der Erfindung, dass die Montage erleichtert und zur endgültigen Fixierung nur ein geringer Aufwand erforderlich ist. In diesem Zusammenhang kann vorgesehen sein, dass das andere Profil von Trägerprofil und Halteprofil als Komplementäreingriffstruktur wenigstens eine Aufnahmeöffnung aufweist, in die die Halteklammer einsetzbar und mit dieser verriegelnd in Eingriff bringbar ist. Zur vereinfachten Herstellung ist es erfindungsgemäß möglich, dass die Schenkel der Halteklammer gerundet ineinander übergehen. Vorzugsweise sind das Halteprofil und das Trägerprofil aus einem Blechmaterial durch Umformschritte hergestellt.

Ferner kann in diesem Zusammenhang erfindungsgemäß vorgesehen sein, dass die Halteklammer einen Spannbereich aufweist, in dem die lichte Weite zwischen dem zweiten Schenkel und der Ebene der Anlagefläche im Bereich der Materialstärke an der Aufnahmeöffnung liegt, vorzugsweise gleich oder kleiner ist als die Materialstärke an der Aufnahmeöffnung. Dadurch wird im Rahmen der Montage ein selbstständiger Anzugeffekt erreicht, der das Solarmodul in seine Solllage vorspannt. Gegebenenfalls reicht es auch aus, wenn die lichte Weite zwischen dem zweiten Schenkel und der Ebene der Anlagefläche etwas größer ist, als die Materialstärke an der Aufnahmeöffnung. Der Anzugeffekt kann bei dieser Variante durch eine Vielzahl von ineinander eingreifenden Eingriffstrukturen (Halteklammern und Aufnahmeöffnungen) erreicht werden.

Zur Vereinfachung der Montage kann erfindungsgemäß ferner vorgesehen sein, dass der zweite Schenkel der Halteklammer an seinem freien Ende zur Ausbildung einer Einführschräge abgewinkelt ausgebildet ist. Darüber hinaus ist es erfindungsgemäß möglich, dass der zweite Schenkel der Halteklammer an seinem freien Ende konisch zulaufend ist. Auch diese Gestaltung des jeweils freien Endes der Halteklammer erlaubt ein erleichtertes "Einfädeln" der Halteklammer in die jeweilige Aufnahmeöffnung.

Ferner kann erfindungsgemäß vorgesehen sein, dass die Aufnahmeöffnung mit einer größeren Breite ausgebildet ist als die maximale Breite der Halteklammer. Dies erlaubt eine Querjustierung der Solarmodule in Breitenrichtung der Aufnahmeöffnung. In diesem Zusammenhang ist es ferner möglich, dass die Aufnahmeöffnung mit wenigstens einer konvexen Auflagekontur versehen ist, mit der sie an dem ersten Schenkel der Halteklammer angreift. Die konvexe Auflagekontur erlaubt eine erleichterte Nachjustierung, falls dies im Anbetracht der Fertigungs- und Montagetoleranzen erforderlich ist.

Erfindungsgemäß kann hinsichtlich der Ausgestaltung des Trägerprofils vorgesehen sein, dass dieses ein im Querschnitt trapezartig ausgebildetes Hohlprofil ist, das mit seiner einen Grundfläche, vorzugsweise seiner Basis, an der Rückseite des Solarmoduls anbringbar ist, vorzugsweise durch Verkleben, und das mit seiner anderen Grundfläche die Anlagefläche bildet. Hinsichtlich des Halteprofils kann erfindungsgemäß vorgesehen sein, dass dieses ein im Querschnitt L-förmig ausgebildetes Profil ist, dessen erster L-Schenkel die Komplementäranlagefläche bildet und dessen zweiter L-Schenkel zur Fixierung an der Fassade vorgesehen ist.

Das vorstehend beschriebene Zusammenwirken zwischen Trägerprofil und Halteprofil sorgt bereits für eine stabile Anbringung des jeweiligen Solarmoduls an der Fassade. Um eine Sicherung auch entgegen der Schwerkraftrichtung vorzusehen, sieht eine Weiterbildung der Erfindung vor, dass die Vorrichtung wenigstens ein Sicherungselement zum Sichern des wenigstens einen Trägerprofils an dem ihm zugeordneten Halteprofil gegen eine Bewegung entgegen der Schwerkraft aufweist. In diesem Zusammenhang kann vorgesehen sein, dass das Sicherungselement von einem Winkelelement gebildet ist, das oberhalb des Trägerprofils in Anlage mit diesem an dem Halteprofil fixierbar ist. Dabei ist es möglich, dass das Sicherungselement eine Positionierungsausnehmung zum Positionieren relativ zum Trägerprofil in einer vorbestimmten Solllage aufweist. Dies erlaubt eine Positionierung in der vorbestimmten Solllage relativ zum Trägerprofil, in der es dann am Trägerprofil fixiert wird und somit das Halteprofil und mit diesem das Solarmodul gegen ein unerwünschtes Lösen vom Trägerprofil sichert. Das Sicherungselement ist so dimensioniert, dass es sich einfach durch einen Spalt zwischen zwei übereinander angeordneten Solarmodulen einführen und montieren lässt.

Erfindungsgemäß kann vor ferner vorgesehen sein, dass das Sicherungselement derart dimensioniert ist, dass es in einem montierten Zustand zwischen dem Halteprofil und dem Solarmodul zur Demontage verschwenkbar ist. Zur endgültigen Fixierung des Sicherungselements an dem Trägerprofil sieht eine Weiterbildung der Erfindung vor, dass das Sicherungselement eine Aufnahmeöffnung für wenigstens ein Fixiermittel aufweist. Das Fixiermittel kann beispielsweise eine Kopfschraube oder dergleichen sein. Die vorstehend angesprochene abgewinkelte Ausbildung des Sicherungselements sorgt dafür, dass es nach einem Lösen des Fixiermittels schwerkraftbedingt nach vorne in den Spalt zwischen zwei übereinander angeordneten Solarmodulen kippt und dort ohne großen Aufwand, vor allem ohne zusätzliches Werkzeug, entnommen werden kann. Ein unerwünschter Verlust oder ein Herunterfallen des Sicherungselements kann dadurch unterbunden werden.

Die Erfindung betrifft ferner ein Solarmodul zum Anbringen an einer Fassade, wobei das Solarmodul an seiner Rückseite mit wenigstens einem Trägerprofil für die Vorrichtung der vorstehend beschriebenen Art versehen ist. Ferner betrifft die Erfindung Trägerprofil sowie ein Halteprofil für die Vorrichtung der vorstehend beschriebenen Art. Zur Vermeidung von Wiederholungen wird auf die vorstehend geschilderten Merkmale von Trägerprofil und Halteprofil verwiesen.

Die Erfindung wird im Folgenden beispielhaft anhand der beiliegenden Figuren erläutert. Es stellen dar:
- Fig. 1: eine perspektivische Ansicht eines Halteprofils;
- Fig. 2: eine perspektivische Ansicht eines Trägerprofils;
- Fig. 3: eine Detailseitenansicht zur Erläuterung der Ausbildung der Halteklammer;
- Fig. 4: eine Detailvorderansicht zur Ansicht gemäß Fig. 3;
- Fig. 5: eine perspektivische Ansicht eines Sicherungselements; und
- Fig. 6: eine perspektivische Ansicht der erfindungsgemäßen Vorrichtung im montierten Zustand.

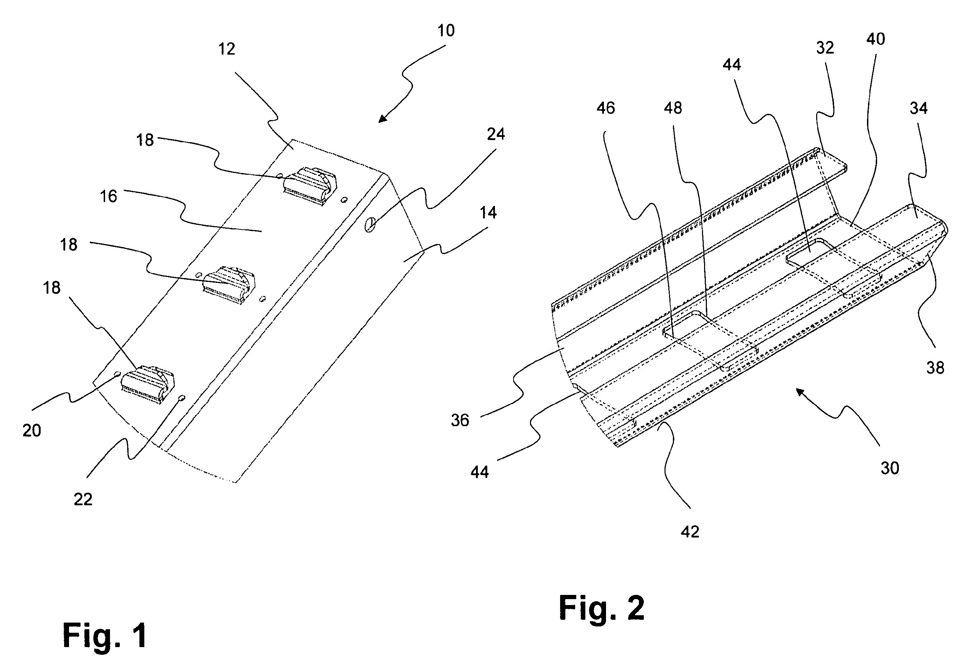

In Figur 1 ist eine Ausführungsvariante eines erfindungsgemäßen Halteprofils gezeigt und allgemein mit 10 bezeichnet. Das Halteprofil 10 ist länglich und im Querschnitt L-förmig ausgebildet und umfasst einen ersten Schenkel 12 sowie einen zweiten Schenkel 14. Der Schenkel 12 ist mit einer Anlagefläche 16 versehen, die im montierten Zustand in etwa parallel zu der zu verkleidenden Gebäudefassade verläuft. Das Halteprofil 10 ist in Form eines Blechs, vorzugsweise Aluminiumblechs ausgebildet. Aus dem ersten Schenkel 12 sind mehrere Halteklammern 18 in regelmäßigen Abständen in Längsrichtung ausgeformt, die sich aus der Ebene der Anlagefläche 16 heraus erstrecken. Beidseits jeder Halteklammer 18 sind jeweils zwei Öffnungen 20,22 vorgesehen. Im zweiten Schenkel 14 sind einzelne Befestigungsöffnungen 24 vorgesehen, die zur Aufnahme von Kabelbefestigungen dienen.

In Figur 2 ist eine entsprechende Ausführungsvariante eines erfindungsgemäßen Trägerprofils gezeigt und allgemein mit 30 bezeichnet. Auch das Trägerprofil 30 ist länglich ausgebildet, jedoch im Querschnitt trapezförmig mit einer teilweise offenen Basis. Die Basis wird definiert durch zwei Basisabschnitte 32,34, mit denen das Trägerprofil 30 an der Rückseite eines nicht gezeigten Solarmoduls fixiert, vorzugsweise verklebt ist. Von den beiden Basisabschnitten 32,34 aus erstrecken sich konisch zulaufende Verbindungsschenkel 36,38. Diese laufen in einen Grundabschnitt 40 aus. Der Grundabschnitt 40 definiert mit seiner in Figur 2 nach unten weisenden Fläche eine im Wesentlichen ebene Komplementäranlagefläche 42. In dem Grundabschnitt 40 sind in regelmäßigen Abständen Aufnahmeöffnungen 44 vorgesehen. Diese haben an ihren einander zugewandten Längsseiten 46,48 jeweils konvex verlaufende Kontur.

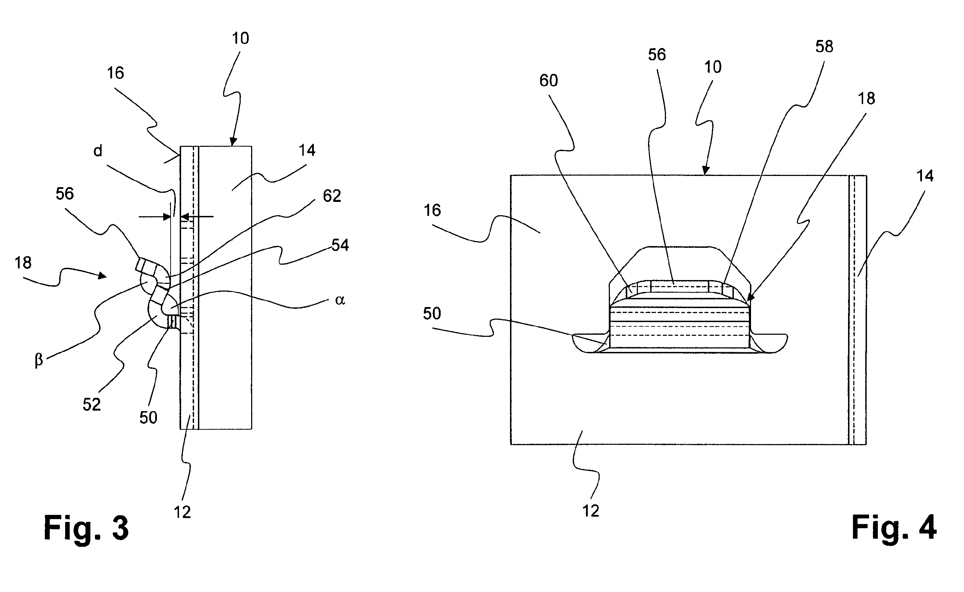

Figuren 3 und 4 zeigen die Ausgestaltung einer Halteklammer 18 im Detail. Diese ist aus dem Blechmaterial des Halteprofils 10 ausgeschnitten und aus diesem herausgebogen. Die Halteklammer 18 umfasst einen ersten Schenkel 50, der im Wesentlichen senkrecht von der Anlagefläche 16 vorsteht. Über eine Rundung 52 geht die Halteklammer 18 in einen zweiten Schenkel 54 über, der nach oben verläuft und in einem Winkel α zur Anlagefläche 16 hin geneigt ist. Im engsten Bereich ist die lichte Weite d zwischen dem zweiten Schenkel 54 und der Anlagefläche 16 etwas kleiner als die Materialstärke des Trägerprofils 30 um eine Aufnahmeöffnung 44 herum. Der zweite Schenkel 54 läuft in einem freien Ende 56 aus, das um einen Winkel β weg von der Anlagefläche 16 geneigt ist. Das freie Ende 56 ist zudem noch mit konisch zulaufenden Seitenflanken 58,60 versehen, wie in Figur 4 erkennbar, die ein Einführen in die Aufnahmeöffnungen 44 erleichtern. In Figur 4 erkennt man auch, dass die Halteklammer 18 aus dem Blechmaterial des Halteprofils 10 ausgeformt ist. Schließlich sei erwähnt, dass der Übergang zwischen dem zweiten Schenkel 54 und den freiem Ende 56 wiederum über eine Rundung 62 erfolgt.

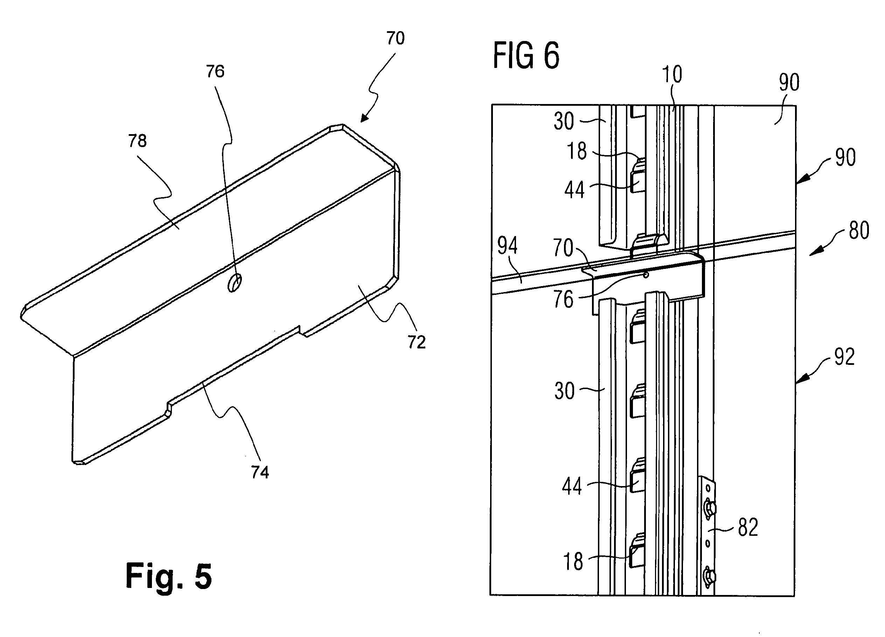

In Figur 5 erkennt man ein Sicherungselement 70 in perspektivischer Darstellung. Dieses ist von einem Winkel gebildet. Ein erster Winkelabschnitt 72 weist an seiner konturierten Unterseite eine Positionierungsausnehmung 74 auf, die etwas größer ist, als die Breite der des Grundabschnitts 40 des Trägerprofils 30. Ferner weist der erste Winkelabschnitt in seinem oberen Bereich eine Aufnahmeöffnung 76 auf. Der zweite Winkelabschnitt 78 ist etwa rechtwinklig zu dem ersten Winkelabschnitt 72 orientiert.

In Figur 6 erkennt man einen montierten Zustand der erfindungsgemäßen Vorrichtung. Dabei ist ein durchgehendes Halteprofil 10 an einer Gebäudefassade 80 in an sich bekannter Weise fixiert. Hierzu dienen Fixierelemente 82, die beispielsweise zur Ankopplung an ein Schienensystem einer an der Gebäudefassade angebrachten thermischen Isolationsausstattung dienen. Das Halteprofil 10 weist eine Vielzahl von Halteklammern 18 auf, die gemäß vorstehender Beschreibung ausgebildet sind. Diese Halteklammern 18 greifen in die korrespondierenden Aufnahmeöffnungen 44 der Trägerprofile 30, die gemäß vorstehender Beschreibung ausgebildet sind. Diese Trägerprofile 30 sind an Solarmodulen 90,92 angebracht, im vorliegenden Fall angeklebt. Zur Montage werden also diese Solarmodule 90,92 mit ihren Trägerprofilen 40 auf die Halteprofile 30 aufgesetzt, so dass die Halteklammern 18 in die Aufnahmeöffnungen 44 eingreifen. Sodann werden die Solarmodule 90,92 abgesenkt, so dass sich die Halteklammern mit den Aufnahmeöffnungen 44 verhaken und so schwerkraftbedingt gehalten werden. Eine Feinjustierung erfolgt im Rahmen des Spiels zwischen den Halteklammern 18 und den Aufnahmeöffnungen 44.

Man erkennt einen Spalt 94 zwischen den Solarmodulen 90,92. In diesem Spalt erkennt man ferner, dass ein Sicherungselement 70 vorgesehen ist, das in Anlage mit dem oberen Ende des in Figur 6 unteren Trägerprofils 30 gebracht ist. In diesem Zustand wird in die Aufnahmeöffnung 76 durch den Spalt 94 eine Fixierschraube eingesetzt, um das Sicherungselement 70 zu fixieren. Nach einer solchen Fixierung des Sicherungselements 70 ergibt sich ein Zustand, in dem das jeweilige Solarmodul 92 schwerkraftbedingt nach unten gezogen und über die Halteklammern 18 und die Aufnahmeöffnungen 44 in Position gehalten wird. Dabei sorgt die Neigung des zweiten Schenkels 54 für einen mechanischen Anzugseffekt, so dass das Trägerprofil 30 mit seiner Anlagefläche 42 in definierter Anlage an der Anlagefläche 16 gehalten wird. Gegebenenfalls wird zur Justierung des Spalts 94 und zur weiteren Ausrichtung des Solarmoduls 92 dieses im Rahmen der zur Verfügung stehenden Breite der Aufnahmeöffnung 44 seitlich auf den Halteklammern 18 verschoben, wobei die konvexe Kontur 48 die auftretende Reibung reduziert und die Ausrichtung erleichtert. Befindet sich das Solarmodul 92 in seiner gewünschten Solllage, so wird anschließend das Sicherungselement 70 in den Spalt eingelegt, so dass die Positionierungsausnehmung 74 auf dem oberen Ende des Grundabschnitts 40 aufliegt. Das Fixieren des Sicherungselements 70 mit einer Fixierschraube sorgt dann dafür, dass das Trägerprofil 30 nicht nach oben geschoben werden kann. Es reicht also je Trägerprofil bzw. je Solarmodul ein einziges Sicherungselement 70, um eine hinreichende Fixierung zu gewährleisten.

Entsprechend einfach verläuft der Demontagevorgang für den Fall, dass ein Solarmodul beschädigt ist und ausgetauscht werden muss. Ein besonderer Vorteil besteht darin, dass beim Lösen der Fixierschraube das Sicherungselement 70 schwerkraftbedingt nach vorne in den Spalt 94 kippt und ohne weiteres entnommen werden kann. Die Winkelform verhindert ein Herunterfallen des Sicherungselements 70.

Ferner sei angemerkt, dass die Träger- und Halteprofile bei geeigneter Materialwahl auch als elektrische Leiter zum Anschließen der Solarmodule genutzt werden können.

Die erfindungsgemäße Vorrichtung bietet ein einfaches System, mit dem bei geringem Montageaufwand und hoher Sicherheit Solarmodule an Fassaden in einer vorgesehenen Solllage, insbesondere in einem vorbestimmten Abstand vom Gebäude, fixiert werden können. Das System benötigt keinerlei Bauteile, die an der Frontfläche der Solarmodule angreifen oder diese Fixieren, so dass es ein hochwertiges optisches Erscheinungsbild einer Fassadenfläche ermöglicht, die mit rahmenlosen Solarmodulen verkleidet werden kann. Das Zusammenwirken von Trägerprofilen und Halteprofilen in der vorstehend beschriebenen Art erlaubt eine gute Hinterlüftung und das Vorsehen von Dämmschichten beliebiger Dicke. Das System ist kostengünstig herstellbar und hat darüber hinaus den Vorteil, dass einzelne Solarmodule aus einem großflächigen Feld von Solarmodulen, wie es sich beispielsweise an einer Gebäudefassade wieder findet, im Schadensfall ausgetauscht werden können, ohne dass an benachbarten Solarmodul angegriffen werden muss oder diese gar mit entfernt werden müssten. Insgesamt bietet das System neben dem Vorteil der Stromerzeugung zusätzliche Funktionen wie Wärmedämmung, Schalldämmung, Witterungsschutz, elektromagnetischen Strahlenschutz, Sichtschutz, sowie vielfältige architektonische Möglichkeiten.

## Patentansprüche

1. Vorrichtung zum Befestigen wenigstens eines Solarmoduls (90, 92), an einer Fassade, vorzugsweise einer Gebäudefassade, umfassend
- wenigstens ein an einem Solarmodul (90, 92) rückseitig angebrachtes Trägerprofil (30), und
- wenigstens ein an der Fassade angebrachtes Halteprofil (10),
wobei wenigstens ein Profil von Trägerprofil (30) und Halteprofil (10) von einem länglichen Element gebildet ist, an dem eine Anlagefläche (16) sowie eine Eingriffsstruktur (18) vorgesehen ist, wobei an dem anderen Profil von Trägerprofil (30) und Halteprofil (10) eine Komplementäranlagefläche (42) und eine Komplementäreingriffstruktur (44) vorgesehen ist, wobei in einem montierten Zustand die Anlagefläche (16) und die Komplementäranlagefläche (42) zur Positionierung des Solarmoduls in einer vorbestimmten Solllage aneinander anliegen und die Eingriffstruktur (18) mit der Komplementäreingriffstrukturen (44) derart zusammenwirkt, dass infolge der Montage des Solarmoduls das Trägerprofil (30) schwerkraftbedingt an dem Halteprofil (10) haltend angebracht ist,
**dadurch gekennzeichnet,**
**dass** die Längsrichtung des Trägerprofils (30) und des Halteprofils (10) im montierten Zustand im Wesentlichen in vertikaler Richtung verläuft, wobei das Trägerprofil (30) parallel zum Halteprofil (10) verläuft,
**dass** ein Profil von Trägerprofil (30) und Halteprofil (10) als Eingriffstruktur wenigstens eine Halteklammer (18) aufweist, die einen ersten Schenkel (50) aufweist, der in einem montierten Zustand die Relativlage von Halteprofil (10) und Trägerprofil (30) in Längsrichtung bestimmt, und die einen zweiten Schenkel (54) aufweist, der im montierten Zustand unter Vorspannung die Anlagefläche (16) in Anlage mit der Komplementäranlagefläche (42) hält, wobei das andere Profil von Trägerprofil (30) und Halteprofil (10) als Komplementäreingriffstruktur wenigstens eine Aufnahmeöffnung (44) aufweist, in die die Halteklammer (18) einsetzbar und mit dieser verriegelnd in Eingriff bringbar ist, und wobei die Aufnahmeöffnung (44) zur Querjustierung des Solarmoduls (90, 92) in Breitenrichtung der Aufnahmeöffnung (44) mit einer größeren Breite ausgebildet ist als die maximale Breite der Halteklammer (18).

2. Vorrichtung nach Anspruch 1,
**dadurch gekennzeichnet, dass** sowohl das Trägerprofil (30) als auch das Halteprofil (10) jeweils von einem länglichen Profil mit im montierten Zustand einander zugewandten ebenen Anlageflächen (16) und Komplementäranlageflächen (42) gebildet sind.

3. Vorrichtung nach einem der vorangehenden Ansprüche,
**dadurch gekennzeichnet, dass** die Schenkel (50, 54) der Halteklammer (18) gerundet ineinander übergehen.

4. Vorrichtung nach einem der vorangehenden Ansprüche,
**dadurch gekennzeichnet, dass** die Halteklammer (18) einen Spannbereich aufweist, in dem die lichte Weite (d) zwischen dem zweiten Schenkel (54) und der Ebene der Anlagefläche (16) im Bereich der Materialstärke an der Aufnahmeöffnung (44) liegt, vorzugsweise gleich oder kleiner ist als die Materialstärke an der Aufnahmeöffnung (44).

5. Vorrichtung nach einem der vorangehenden Ansprüche,
**dadurch gekennzeichnet, dass** der zweite Schenkel (54) der Halteklammer (18) an seinem freien Ende (56) zur Ausbildung einer Einführschräge abgewinkelt ausgebildet ist.

6. Vorrichtung nach einem der vorangehenden Ansprüche,
**dadurch gekennzeichnet, dass** der zweite Schenkel (56) der Halteklammer an seinem freien Ende konisch zulaufend ist.

7. Vorrichtung nach einem der vorangehenden Ansprüchen,
**dadurch gekennzeichnet, dass** die Aufnahmeöffnung (44) mit wenigstens einer konvexen Auflagekontur (46, 48) versehen ist, mit der sie an dem ersten Schenkel (50) der Halteklammer (18) angreift.

8. Vorrichtung nach einem der vorangehenden Ansprüche,
**dadurch gekennzeichnet, dass** das Trägerprofil (30) ein im Querschnitt trapezartig ausgebildetes Hohlprofil ist, das mit seiner einen Grundfläche (32, 34), vorzugsweise seiner Basis, an der Rückseite des Solarmoduls anbringbar ist, vorzugsweise durch Verkleben, und das mit seiner anderen Grundfläche (40) die Komplementäranlagefläche (42) bildet.

9. Vorrichtung nach einem der vorangehenden Ansprüche,
**dadurch gekennzeichnet, dass** das Halteprofil (10) einen Querschnitt L-förmig ausgebildetes Profil ist, dessen erster L-Schenkel (12) die Anlagefläche (16) bildet und dessen zweiter L-Schenkel (14) zur Fixierung an der Fassade vorgesehen ist.

10. Vorrichtung nach einem der vorangehenden Ansprüche,
**gekennzeichnet durch** wenigstens ein Sicherungselement (70) zum Sichern des wenigstens einen Trägerprofils (30) an dem ihm zugeordneten Halteprofil (10) gegen eine Bewegung entgegen der Schwerkraft.

11. Vorrichtung nach Anspruch 10,
**dadurch gekennzeichnet, dass** das Sicherungselement (70) von einem Winkelelement gebildet ist, das oberhalb des Trägerprofils (30) in Anlage mit diesen an dem Halteprofil (10) fixierbar ist.

12. Vorrichtung nach Anspruch 10 oder 11,
**dadurch gekennzeichnet, dass** das Sicherungselement eine Positionierungsausnehmung zum Positionieren relativ zum Trägerprofil (30) in einer vorbestimmten Solllage aufweist.

13. Vorrichtung nach einem der Ansprüche 10 bis 12,
**dadurch gekennzeichnet, dass** das Sicherungselement (70) derart dimensioniert ist, dass es in einem montierten Zustand zwischen dem Halteprofil (10) und dem Solarmodul zur Demontage verschwenkbar ist.

14. Vorrichtung nach einem der Ansprüche 10 bis 13,
**dadurch gekennzeichnet, dass** das Sicherungselement (70) eine Aufnahmeöffnung für wenigstens ein Fixiermittel aufweist.

15. Solarmodul zum Anbringen an einer Fassade, wobei das Solarmodul an seiner Rückseite mit wenigstens einem Trägerprofil (30) für eine Vorrichtung nach einem der vorangehenden Ansprüche versehen ist.

16. Trägerprofil (30) für eine Vorrichtung nach einem der vorangehenden Ansprüche.

17. Halteprofil (10) für eine Vorrichtung nach einem der vorangehenden Ansprüche.

## Claims

1. A device for fastening at least one solar module (90, 92) on a façade, preferably a façade of a building, comprising
- at least one carrier profile (30) which is attached on the rear side of a solar module (90, 92), and
- at least one holding profile (10) which is attached on the façade,
wherein at least one of the carrier profile (30) and the holding profile (10) is formed by an elongated element at which an abutment face (16) as well as an engagement structure (18) are provided, wherein at the other one of the carrier profile (30) and the holding profile (10) a complementary abutment face (42) and a complementary engagement structure (44) are provided, wherein the abutment face (16) and the complementary abutment face (42) are abutting each other in the installed condition and the engagement structure (18) and the complementary engagement structure (44) cooperate in such a manner that as a result of the installation of the solar module, the carrier profile (30) is attached in a holding capacity on the holding profile (10) due to gravity,
**characterised in that**
the longitudinal direction of the carrier profile (30) and the holding profile (10) in the installed condition extends essentially in a vertical direction, wherein the carrier profile (30) extends parallel to the holding profile (10),
that one of the carrier profile (30) and the holding profile (10) comprises at least one holding clip (18) as an engagement structure, which includes a first leg (50) which, in the installed condition, determines the relative position of the holding profile (10) and the carrier profile (30) in a longitudinal direction, and a second leg (54) which in the installed condition under pretension holds the abutment face (16) in contact with the complementary abutment face (42), wherein the other one of the carrier profile (30) and the holding profile (10) comprises at least one reception opening (44) as a complementary engagement structure into which the holding clip (18) may be inserted and engaged in a locking capacity, and wherein the reception opening (44) is formed with a greater width than the maximum width of the holding clip (18) for a transverse adjustment of the solar module (90, 92) in the width direction of the reception opening (44).

2. The device according to Claim 1,
**characterised in that** both the carrier profile (30) and the holding profile (10) are formed by an elongated profile with plane abutment faces (16) and complementary abutment faces (42) which are facing each other in the installed condition.

3. The device according to one of the previous claims,
**characterised in that** the legs (50, 54) of the holding clamp (18) are rounded and merge into one another.

4. The device according to one of the previous claims,
**characterised in that** the holding clamp (18) has a clamping range in which the clear width (d) between the second leg (54) and the plane of the abutment face (16) lies within the range of the material thickness at the reception opening (44), and is preferably equal to or smaller than the material thickness at the reception opening (44).

5. The device according to one of the previous claims,
**characterised in that** the second leg (54) of the holding clamp (18) is formed angled at its free end (56) for forming an insertion slope.

6. The device according to one of the previous claims,
**characterised in that** the second leg (54) of the holding clamp (18) is formed conical at its free end.

7. The device according to one of the previous claims,
**characterised in that** the reception opening (44) is provided with at least one convex contact contour (46, 48) which presses against the first leg (50) of the holding clamp (18).

8. The device according to one of the previous claims,
**characterised in that** the carrier profile (30) is a hollow profile with a trapezoidal cross-section, which may be attached at the rear side of the solar module with one base surface (32, 34), preferably its base, preferably by gluing, and which forms the complementary abutment face (42) with its other base surface (40).

9. The device according to one of the previous claims,
**characterised in that** the holding profile (10) is a profile with an L-shaped cross-section, whose first L leg (12) forms the abutment face (16) and whose second L leg (14) is provided for fixing on the façade.

10. The device according to one of the previous claims,
**characterised by** at least one locking element (70) for locking the at least one carrier profile (30) at the assigned holding profile (10) against movement against gravity.

11. The device according to Claim 10,
**characterised in that** the locking element (70) is formed by an angular element which may be fixed on the holding profile (10) above the carrier profile (30) and in contact with it.

12. The device according to Claim 10 or 11,
**characterised in that** the locking element (70) comprises a positioning recess for positioning relative to the carrier profile (30) in a predetermined set position.

13. The device according to one of Claims 10 to 12,
**characterised in that** the locking element (70) is dimensioned in such a manner that is may be rotated between the holding profile (10) and the solar module for disassembly in the installed condition.

14. The device according to one of Claims 10 to 13,
**characterised in that** the locking element (70) comprises a reception opening for at least one fixing element.

15. A solar module to be fastened on a façade, wherein the solar module is provided with at least one carrier module (30) at its rear side for a device according to one of the previous claims.

16. A carrier profile (30) for a device according to one of the previous claims.

17. A holding profile (10) for a device according to one of the previous claims.

## Revendications

1. Dispositif de fixation pour fixer au moins un module solaire (90, 92) sur une façade, de préférence une façade de bâtiment, comprenant,
- au moins un profilé de support (30) monté au dos d'un module solaire (90, 92), et
- au moins un profilé de maintien (10) monté sur la façade,
au moins un profilé du profilé de support (30) et du profilé de maintien (10) étant formés par un élément allongé sur lequel sont prévues une surface d'appui (16) et une structure de mise en prise (18), une surface d'appui complémentaire (42) et une surface de mise en prise complémentaire (44) étant prévues sur l'autre profilé du profilé de support (30) et du profilé de maintien (10), ladite surface d'appui (16) et la surface d'appui complémentaire (42) reposant l'une contre l'autre dans un état monté pour le positionnement du module solaire dans une position théorique prédéfinie, et ladite structure de mise en prise (18) coopérant avec la structure de mise en prise complémentaire (44) de telle manière que le profilé de support (30) est disposé maintenu par gravité sur le profilé de maintien (10) après qu'a été monté le module solaire,
**caractérisé en ce que**
la longueur longitudinale du profilé de support (30) et du profilé de maintien (10) s'étend sensiblement dans la direction verticale à l'état monté, le profilé de support (30) s'étendant parallèlement au profilé de maintien (10),
**en ce qu'**un profilé du profilé de support (30) et du profilé de maintien (10) présente au moins une agrafe (18) en tant que structure de mise en prise, laquelle agrafe présente un premier bras (50), qui, dans un état monté, détermine la position relative du profilé de maintien (10) et du profilé de support (30) dans la direction longitudinale, et présente un deuxième bras (54) qui, à l'état monté, maintient sous précontrainte la surface d'appui (16) en contact avec la surface d'appui complémentaire (42), l'autre profilé du profilé de support (30) et du profilé de maintien (10) présentant au moins une ouverture de logement (44) en tant que structure de mise en prise complémentaire, dans laquelle ouverture l'agrafe (18) peut venir s'engager et être mise en prise avec celle-ci de manière bloquante, et l'ouverture de logement (44) étant réalisée avec une largeur plus grande que la largeur maximale de l'agrafe (18) pour l'ajustage transversal du module solaire (90, 92) dans la direction de la largeur de l'ouverture de logement (44).

2. Dispositif selon la revendication 1,
**caractérisé en ce que** aussi bien le profilé de support (30) que le profilé de maintien (10) sont respectivement formés par un profilé allongé doté de surfaces d'appui (16) et de surfaces d'appui complémentaires (42) planes tournées les unes vers les autres à l'état monté.

3. Dispositif selon l'une des revendications précédentes,
**caractérisé en ce que** les bras (50, 54) de l'agrafe (18) s'enchaînent de manière continue tout en s'arrondissant.

4. Dispositif selon l'une des revendications précédentes,
**caractérisé en ce que** l'agrafe (18) présente une plage de serrage dans laquelle la largeur libre (d) entre le deuxième bras (54) et le plan de la surface d'appui (16) est comprise dans la plage de l'épaisseur de matériau à l'ouverture de logement (44), cette largeur étant de préférence inférieure ou égale à l'épaisseur de matériau à l'ouverture de logement (44).

5. Dispositif selon l'une des revendications précédentes,
**caractérisé en ce que** le deuxième bras (54) de l'agrafe (18) est réalisé coudé à son extrémité libre (56) pour former une rampe d'introduction.

6. Dispositif selon l'une des revendications précédentes,
**caractérisé en ce que** le deuxième bras (56) de l'agrafe se termine de manière conique à son extrémité libre.

7. Dispositif selon l'une des revendications précédentes,
**caractérisé en ce que** l'ouverture de logement (44) est pourvue d'au moins un contour d'appui convexe (46, 48) avec lequel elle vient en prise avec le premier bras (50) de l'agrafe (18).

8. Dispositif selon l'une des revendications précédentes,
**caractérisé en ce que** le profilé de support (30) consiste en un profilé creux ayant une section de forme trapézoïdale, qui peut être monté, de préférence par collage, au dos du module solaire par le biais de sa surface de base (32, 34), de préférence par le biais de sa base, et qui forme avec son autre surface de base (40) la surface d'appui complémentaire (42).

9. Dispositif selon l'une des revendications précédentes,
**caractérisé en ce que** le profilé de maintien (10) consiste en un profilé en forme de L dont le premier bras (12) du L forme la surface d'appui (16) et dont le deuxième bras (14) du L est prévu pour assurer la fixation sur la façade.

10. Dispositif selon l'une des revendications précédentes,
**caractérisé par** au moins un élément de blocage (70) pour bloquer ledit au moins un profilé de support (30) sur le profilé de maintien (10) qui lui est associé et pour empêcher tout mouvement à l'encontre du sens d'action de la pesanteur.

11. Dispositif selon la revendication 10,
**caractérisé en ce que** l'élément de blocage (70) est formé par un élément angulaire qui peut être fixé sur le profilé de maintien (10) au-dessus du profilé de support (30), en appui sur celui-ci.

12. Dispositif selon la revendication 10 ou 11,
**caractérisé en ce que** l'élément de blocage (70) présente un évidement de positionnement pour son positionnement par rapport au profilé de support (30), selon une position théorique prédéfinie.

13. Dispositif selon l'une des revendications 10 à 12,
**caractérisé en ce que** l'élément de blocage (70) est dimensionné de sorte qu'il peut, dans un état monté, basculer entre le profilé de maintien (10) et le module solaire en vue de son démontage.

14. Dispositif selon l'une des revendications 10 à 13,
**caractérisé en ce que** l'élément de blocage (70) présente une ouverture de logement pour au moins un moyen de fixation.

15. Module solaire à monter sur une façade, ce module solaire étant muni à son dos d'au moins un profilé de support (30) destiné à un dispositif selon l'une des revendications précédentes.

16. Profilé de support (30) destiné à un dispositif selon l'une des revendications précédentes.

17. Profilé de maintien (10) destiné à un dispositif selon l'une des revendications précédentes.
